Europäisches Patentamt

European Patent Office

Office européen des brevets

(11) Publication number: **0 445 757 A2**

# EUROPEAN PATENT APPLICATION

(21) Application number: 91103380.1

(22) Date of filing: 05.03.91

(51) Int. Cl.⁵: **H05B 41/36, H05B 37/02**

(30) Priority: 07.03.90 JP 55893/90
29.12.90 JP 417271/90

(43) Date of publication of application:
**11.09.91 Bulletin 91/37**

(84) Designated Contracting States:
**DE FR GB IT NL**

(71) Applicant: **TDK CORPORATION**
**13-1, Nihonbashi 1-chome**
**Chuo-ku Tokyo(JP)**

(72) Inventor: **Matsui, Kiyoshi,c/o TDK Corporation**
**13-1 Nihonbashi 1-chome**
**Chuo-ku, Tokyo(JP)**
Inventor: **Kanno, Takayuki, c/o TDK**
**Corporation**
**13-1 Nihonbashi 1-chome**
**Chuo-ku, Tokyo(JP)**

(74) Representative: **Münich, Wilhelm, Dr. et al**
**Kanzlei Münich, Steinmann, Schiller**
**Willibaldstrasse 36/38**
**W-8000 München 21(DE)**

(54) Electric discharge lamp unit.

(57) A high-intensity electric discharge lamp is turned on in an ideal starting characteristics regardless of the internal condition thereof during the night or in a tunnel, in which no ambient light falls on the high-intensity electric discharge lamp. Upon the reception of the ambient light, the high-intensity electric discharge lamp is turned off automatically. In a modification, the high-intensity electric discharge lamp unit is provided with first and second photoelectric conversion elements, the luminous flux of the light emitted by the high-intensity electric discharge lamp is controlled on the basis of the output signal of the first photoelectric conversion element corresponding to the luminous flux of the light emitted by the high-intensity electric discharge lamp, and the high-intensity electric discharge lamp is turned off when the second photoelectric conversion element receives the ambient light.

EP 0 445 757 A2

## BACKGROUND OF THE INVENTION

### Field of the Invention

The present invention relates to a high-intensity electric discharge lamp unit and, more specifically, to a high-intensity electric discharge lamp unit including an electric discharge lamp lighting device comprising a photoelectric converter which provides an electric output signal corresponding to the output light of the high-intensity electric discharge lamp and/or external light falling thereon, and capable of controlling the lighting function of the high-intensity electric discharge lamp on the basis of the output electric signal of the photoelectric converter so that the high-intensity electric discharge lamp is able to be lighted or extinguished in an ideal starting or extinguishing mode virtually regardless of the internal condition of the high-intensity electric discharge lamp.

### Description of the Prior art

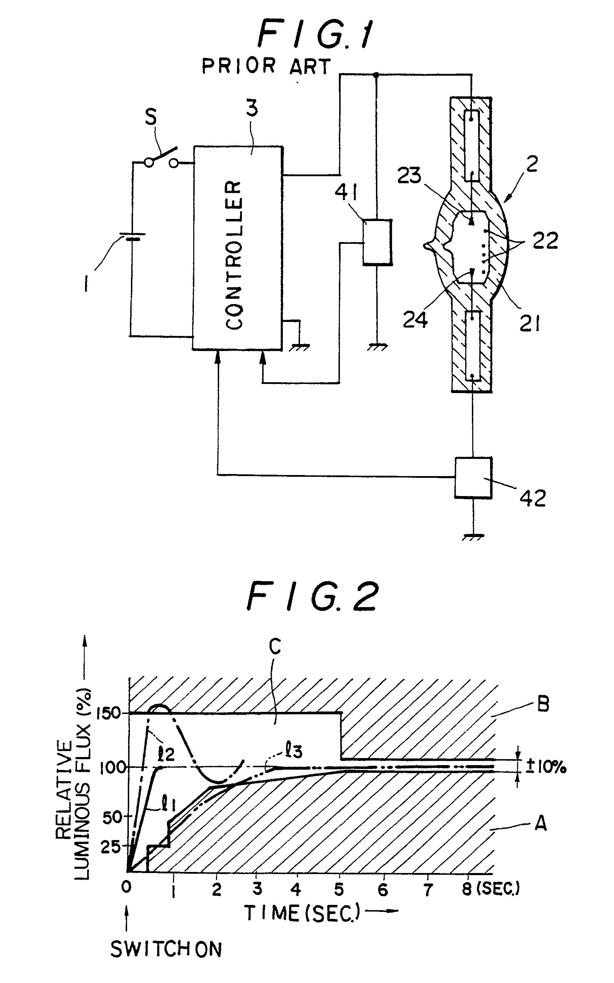

Fig. 1 shows a high-intensity electric discharge lamp unit including an electric discharge lamp lighting device for lighting a high-intensity electric discharge lamp. Shown in Fig. 1 are a power supply 1, a high-intensity electric discharge lamp 2, a controller 3, a voltage detecting circuit 41, a current detecting circuit 42 and a switch S.

The high-intensity electric discharge lamp 2 has a tube 21 formed of quartz glass or the like and containing a rare gas, mercury, a metal halide 22, and electrodes 23 and 24 disposed opposite to each other with a predetermined interval therebetween.

The controller 3 comprises a Dc-to-Dc converter for raising an input Dc voltage applied thereto by the power supply 1 to a high Dc voltage, and a high-voltage generating circuit for generating high-voltage pulses by switching the output of the Dc-to-Dc converter to apply a high-voltage pulses of a voltage, for example, a voltage in the range of 10 to 15 kV across the electrodes 23 and 24. The controller 3 controls the lighting condition of the electric discharge lamp 2 on the basis of detection signals provided by the voltage detecting circuit 41 and the current detecting circuit 42.

When a high-voltage pulses are applied across the electrodes 23 and 24, arc discharge is produced between the electrodes 23 and 24 through the gas contained in the tube 21. Then, the metal halide 22 is vaporized by the heat of the arc discharge to emit light of a maximum intensity. After the electric discharge lamp has thus been started, pulses of a comparatively low voltage are applied continuously across the electrodes 23 and 24.

The high-intensity electric discharge lamp 2, differing from a halogen lamp which is employed generally as the headlamp of an automobile, radiates light by producing electric discharge in a gas, and is capable of emitting light of a luminous flux three to four times that of light emitted by the halogen lamp at an electric energy consumption rate on the order of one-third that of the halogen lamp. The high-intensity electric discharge lamp capable of such high performance is of high utility value as an automotive headlamp. The automotive headlamp is an important component significantly influencing the design of an automobile. The high-intensity electric discharge lamp, which can be formed in a comparatively small overall dimension will affect the design of an automobile significantly.

In applying a high-intensity electric discharge lamp to an automotive headlamp, the high-intensity electric discharge lamp must meet sever standards, for example, the SAE standards, requiring immediate lighting capability, sufficiently long life and lighting stability to secure the safe running of the automobile. Fig. 2 is a graph showing the lighting time characteristics specified in the standards to be met by the automotive headlamp in starting the automotive headlamp in a cold-start mode, in which time (sec) is measured on the horizontal axis, and relative luminous flux (%) is measured on the vertical axis. Relative luminous flux is the ratio in percent of transient luminous flux to the steady-state luminous flux. Hatched regions are inadmissible regions A and B, and a region between the inadmissible regions A and B is an admissible region C. The high-intensity electric discharge lamp 2 must be controlled so that its luminous flux varies with time within the admissible region C as indicated by a curve $1_1$. The lighting characteristics indicated by the curve $1_1$ in Fig. 2 require the following functions.

To secure the immediate lighting capability, the relative luminous flux must increase to 25% in about 0.5 sec after the high-voltage pulses have been applied to the high-intensity electric discharge lamp 2 by turning on the switch S and the relative luminous flux must increase to about 80% in 2 sec.

The maximum relative luminous flux at the start of the high-intensity electric discharge lamp 2 must be less than 150% to the requisite life characteristics.

Furthermore, error in the relative luminous flux in the steady state must be within ±l0%.

It has been a usual procedure to detect the working voltage and the working current by the voltage detecting circuit 41 and the current detecting circuit 42, and to control the current or the voltage applied to the high-intensity electric discharge lamp 2 on the basis of detection signals provided by the voltage detecting circuit 41 and the current detecting circuit 42 to meet the standard shown in Fig. 2. However, it has been very hard to meet the standard shown in Fig. 2 by the foregoing procedure. Problems in this procedure will be described hereinafter.

(A) The high-intensity electric discharge lamp 2 used as a headlamp is turned on and off in many cases by operating a passing signal switch. Fundamentally, the headlamp must meet the standard shown in Fig. 2 even in such an on-and-off lighting mode. However, when the headlamp is turned on again for immediately after the same has been turned off, the tube 21 is hot, and hence the lighting characteristics of the headlamp in starting the headlamp in a hot-start mode is different from those in starting the same in a cold-start mode. Accordingly, it is very difficult to control the high-intensity electric discharge lamp 2 properly in starting the same in a hot-start mode so as to meet the standard shown in Fig. 2.

(B) The temperature of the tube 21 in restarting the high-intensity electric discharge lamp 2 in a hot-start mode is dependent on the ambient condition and the duration of the off state of the high-intensity electric discharge lamp 2 and, practically, it is impossible to detect and control the temperature of the tube 21. The condition of the gas within the tube 21 is dependent greatly on the temperature of the tube 21, and the current and the voltage is affected significantly by the condition of the gas. Since the prior art controls the high-intensity electric discharge lamp 2 on the basis of the current and the voltage varying with the internal condition of the tube 21, it is very difficult to control the high-intensity electric discharge lamp 2 so as to meet the standard shown in Fig. 2.

(C) In turning on the high-intensity electric discharge lamp 2 in a cold-start mode, the relative luminous flux must increase to 25% in 0.5 sec and to 80% in 2 sec after the switch 4 has been closed. If an increased current is supplied to meet such a starting requirement, the relative luminous flux will vary along a curve $1_2$ and the relative luminous flux may possibly exceeds 150%. If the current is controlled so that the relative luminous flux may not exceed 150%, the relative luminous flux may possibly vary along a curve $1_3$ which extends through the inadmissible region A.

Accordingly, it is an object of the present invention to solve the foregoing problems in the prior art and to provide an electric discharge lamp lighting device capable of lighting or extinguishing a high-intensity electric discharge lamp in a mode meeting the standard virtually regardless of the internal condition of the high-intensity electric discharge lamp.

## SUMMARY OF THE INVENTION

To achieve the object, in a first aspect of the present invention, a high-intensity electric discharge lamp unit comprises a high-intensity electric discharge lamp wherein light is emitted by gas discharge in the tube thereof, a controller for controlling the high-intensity electric discharge lamp, and a photoelectric converter.

The high-intensity electric discharge lamp unit is characterized in that the photoelectric converter is provided with a photoelectric conversion element which receives light emitted by the high-intensity electric discharge lamp and converts the light into a corresponding electric signal, and the controller controls the high-intensity electric discharge lamp for lighting on the basis of the output electric signal of the photoelectric conversion element corresponding to the light emitted by the high-intensity electric discharge lamp.

The photoelectric converter may be provided with a first photoelectric conversion element for receiving the light emitted by the high-intensity electric discharge lamp, and a second photoelectric conversion element for receiving the ambient light, and the controller controls the high-intensity electric discharge lamp on the basis of the output signals of the first and second photoelectric conversion elements.

The photoelectric conversion element of the photoelectric converter receives the light emitted by the high-intensity electric discharge lamp and gives an electric signal corresponding to the light to the controller. The controller controls the high-intensity electric discharge lamp for lighting on the basis of the electric signal given thereto by the photoelectric converter. Thus, the high-intensity electric discharge lamp is controlled for lighting on the basis of it own luminous flux virtually regardless of the internal condition thereof. Accordingly, the high-intensity electric discharge lamp can be controlled in an ideal starting characteristics for lighting regardless of the internal condition of the high-intensity electric discharge lamp in both starting the high-intensity electric discharge lamp in a cold-start mode and starting the same in a hot-start mode.

In second and third aspects of the present invention, the photoeleotric converter is provided with first and second photoelectric conversion elements which receive the light emitted by the high-intensity electric discharge lamp and the ambient light, and converts the same into corresponding electric signals, respectively. When the second photoelectric conversion element receives the ambient light, the controller turns off the high-intensity electric discharge lamp. The high-intensity electric discharge lamp is turned on only during the night or in a tunnel, in which the ambience is dark. When the photoelectric conversion element receives the ambient light, the high-intensity electric discharge lamp is turned off automatically.

BRIEF DESCRIPTION OF THE DRAWINGS

Figure 1 is a block diagram of a conventional high-intensity electric discharge lamp unit;

Figure 2 is a graph showing a required time characteristics of relative luminous flux in starting an automotive headlamp specified in a standard;

Figure 3 is a block diagram of a high-intensity electric discharge lamp unit in a first embodiment according to the present invention;

Figure 4 is a circuit diagram of the high-intensity electric discharge lamp unit of Fig. 3;

Figure 5 is an illustration of the concrete configuration of the high-intensity electric discharge lamp unit of Fig. 3;

Figure 6 is a block diagram of a high-intensity electric discharge lamp unit in a second embodiment according to the present invention;

Figure 7 is a circuit diagram of the high-intensity electric discharge lamp unit of Fig. 6;

Figure 8 is an illustration of the concrete configuration of the high-intensity electric discharge lamp unit of Fig. 6; and

Figure 9 is a timing chart of assistance in explaining the lighting mode of the high-intensity electric discharge lamp unit of Fig. 6.

DESCRIPTION OF THE PREFERRED EMBODIMENTS

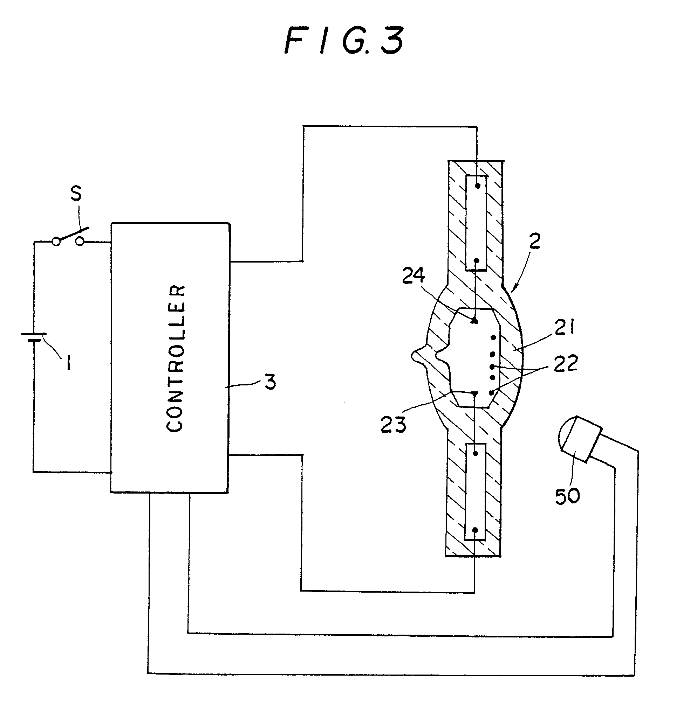

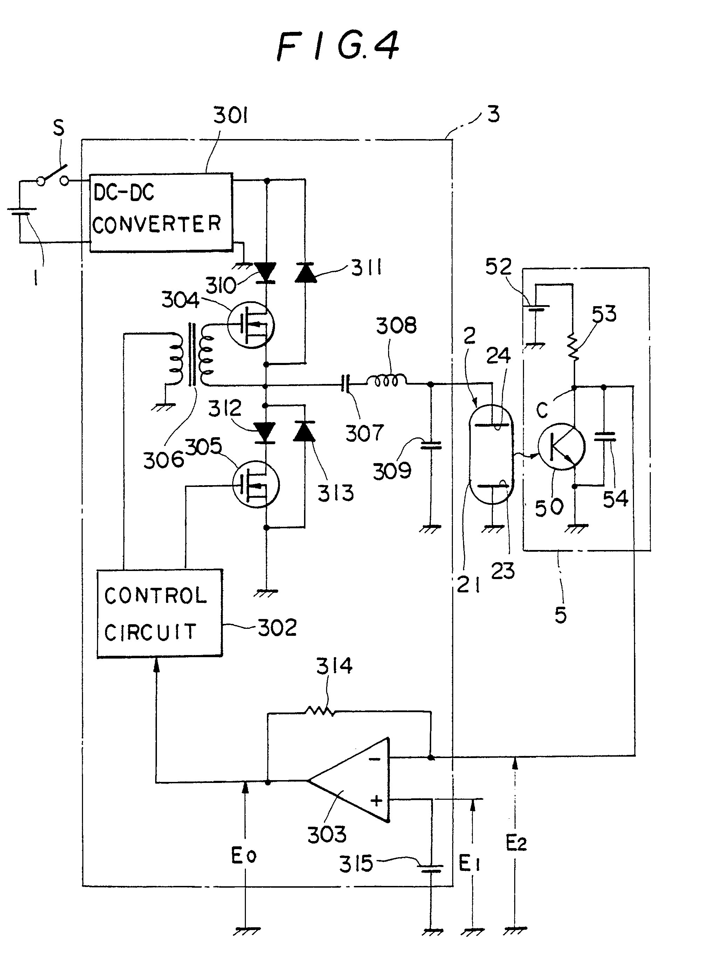

Referring to Figs 3 and 4 showing a high-intensity electric discharge lamp unit in a first embodiment according to the present invention, there are shown a power supply 1, a high-intensity electric discharge lamp 2, a controller 3 connected to the high-intensity electric discharge lamp 2 and the power supply 1, a voltage detecting circuit 41, a current detecting circuit 42, and a switch S. The high-intensity electric discharge lamp 2 has a quartz glass tube 21 containing a rare gas, mercury, a metal halide 22, and a pair of electrodes 23 and 24 disposed opposite to each other with a predetermined interval therebetween. The controller 3 comprises a Dc-to-Dc converter for raising the voltage of a Dc input give thereto by the power supply 1, a high-voltage generating circuit, and a control circuit. The high-voltage generating circuit and the control circuit generates high-voltage pulses by switching the output of the Dc-to-Dc converter. The controller 3 applies high voltage pulses of a voltage, for example, in the range of 10 to 15 kV across the electrodes 23 and 24 of the high-intensity electric discharge lamp 2. The controller 3 controls the high-intensity electric discharge lamp 2 on the basis of detection signals provided by the voltage detecting circuit 41 and the current detecting circuit 42. When high-voltage pulses are applied across the electrodes 23 and 24, an arc discharge is produced through the gas contained in the tube 21 between the electrodes 23 and 24 and, consequently, the metal halide 22 is vaporized by the heat of the arc discharge to emit a maximum luminous flux of light. Voltage pulses of a comparatively low voltage is applied continuously across the electrodes 23 and 24 after the high-intensity electric discharge lamp 2 has been lighted.

A photoelectric converter 5 receives the light emitted by the high-intensity electric discharge lamp 2 and provides an electric signal corresponding to the luminous flux of the light. The photoelectric converter 5 may be either a composite photoelectric converter comprising, in combination, an optical system for receiving the light emitted by the high-intensity electric discharge lamp 2, and photoelectric conversion elements or an integral photoelectric converter comprising an optical system and photoelectric conversion elements. When the composite photoelectric converter is employed, the optical system comprising an optical fiber cable and lenses is interposed between the photoelectric conversion element and the high-intensity electric discharge lamp 2. When the integral photoelectric converter is employed, the photoelectric conversion element receives the light emitted by the high-intensity electric discharge lamp 2 directly.

The controller 3 controls the voltage applied across the electrodes 23 and 24 or the current flowing through the the high-intensity electric discharge lamp 2 on the basis of the output signal of the photoelectric converter 5 so that the luminous flux of the light emitted by the high-intensity electric discharge lamp 2 coincides with a desired luminous flux. The desired luminous flux, in general, corresponds to that of light to be emitted by the high-intensity electric discharge lamp 2 in a steady lighting state.

Since the high-intensity electric discharge lamp 2 is controlled on the basis of its own luminous flux independent of its internal condition substantially regardless of its internal condition, the high-intensity electric discharge lamp 2 can be controlled for lighting substantially regardless of its internal condition so as to meet the ideal starting characteristics represented by the curve $1_1$ in Fig. 2 in starting the high-intensity electric discharge lamp 2 in a hot-start mode as well as in a cold-start mode.

Referring to Fig. 4, the controller 3 comprises a Dc-to-Dc converter 301, a control circuit 302, an operational amplifier 303, switching elements 304 and 305, a driving transformer 306, a capacitor 307, an inductor 308, a capacitor 309, diodes 310 to 313, a resistor 314, and a reference power supply 315.

The Dc-to-Dc converter 301 converts a low input Dc voltage applied thereto by the Dc power supply 1 into a higher output Dc voltage. The Dc power supply 1 is, for example, as in vehicles a low-voltage battery of Dc 12 V or Dc 24 V output voltage. The Dc-to-Dc converter 301 converts a low input Dc voltage into a high output Dc voltage necessary for lighting the high-intensity electric discharge lamp 2.

The control circuit 302 controls the switching elements 304 and 305. In this embodiment, the control circuit is a voltage-controlled frequency converter for variable switching frequency control.

The operational amplifier 303 provides an output voltage signal $E_0$ according to a reference voltage signal $E_1$ given thereto by the reference power supply 315 and a voltage signal $E_2$ given thereto by the photoelectric converter 5.

The switching elements 304 and 305 are field effect transistors or bipolar transistors. The switching elements 304 and 305 are controlled for switching action by signals provided by the control circuit 302. The switching element 304 functions for repetitive switching action of a frequency corresponding to that of a control signal given thereto through the driving transformer 306 by the control circuit 302 to interrupt the output Dc voltage of the Dc-to-Dc converter 301 at regular intervals. The switching element 305 is controlled by the control circuit 302 so as to be on while the switching element 304 is off.

A resonance circuit consisting of the inductor 308 and the capacitor 309 provides a high resonance voltage when the switching elements 304 and 305 operate for switching function at the resonance frequency $f_0$ of the resonance circuit. The resonance voltage is applied to the high-intensity electric discharge lamp 2 to trigger the same.

The photoelectric converter 5 comprises a photoelectric conversion element 50, such as a phototransistor, a biasing power supply 52, a resistor 53 and a capacitor 54. The photoelectric conversion element 50 is connected optically to the high-intensity electric discharge lamp 2 to receive the light emitted by the latter.

The high-intensity electric discharge lamp 2 is not lighted and the photoelectric conversion element 50 is virtually off immediately after the switch S has been closed to connect the high-intensity electric discharge lamp unit to the power supply 1. In this state, the control circuit 302 drives the switching elements 304 and 305 so that the switching frequency coincides with the resonance frequency $f_0$ of the resonance circuit consisting of the inductor 308 and the capacitor 309. Consequently, voltage pulses of the high resonance voltage is applied across the electrodes 23 and 24 of the high-intensity electric discharge lamp 2 to produce an arc discharge between the electrodes 23 and 24.

Since the arc discharge in a starting stage makes the high-intensity electric discharge lamp 2 emit light of a low luminous flux, the level of a voltage signal $E_2$ applied to the operational amplifier 303 by the photoelectric converter 5 varies in a very narrow range and the operational amplifier 303 provides a voltage signal $E_0$ of a low level. Accordingly, during the starting stage, the switching elements 304 and 305 are driven at a low frequency to supply a high current to the high-intensity electric discharge lamp 2 and, consequently, the metal halide of the high-intensity electric discharge lamp 2 is evaporated at a high rate by the heat of the arc discharge so that the luminous flux increases in a very short time.

In this state, the high-intensity electric discharge lamp 2 emits light of high luminous flux. Since the photoelectric conversion element 50 receives the light of the high luminous flux, the potential of the collector C thereof drops and the level of the voltage signal $E_2$ applied to the negative terminal of the operational amplifier 303 drops, so that the level of the output voltage signal $E_0$ of the operational amplifier 303 rises. Consequently, the control circuit 302 drives the switching elements 304 and 305 for switching operation at a switching frequency higher than that at the start of the high-intensity electric discharge lamp 2. Then, the peak of the current pulses applied to the high-intensity electric discharge lamp 2 drops and, eventually, stable voltage pulses of a fixed voltage is applied across the electrodes 23 and 24 of the high-intensity electric discharge lamp 2. for lighting in a steady state.

In the steady state, the voltage signal $E_2$ applied to the operational amplifier 303 and the output voltage signal $E_0$ of the operational amplifier 303 vary according to the variation of the luminous flux of the light emitted by the high-intensity electric discharge lamp 2 so that the luminous flux of the light is constant.

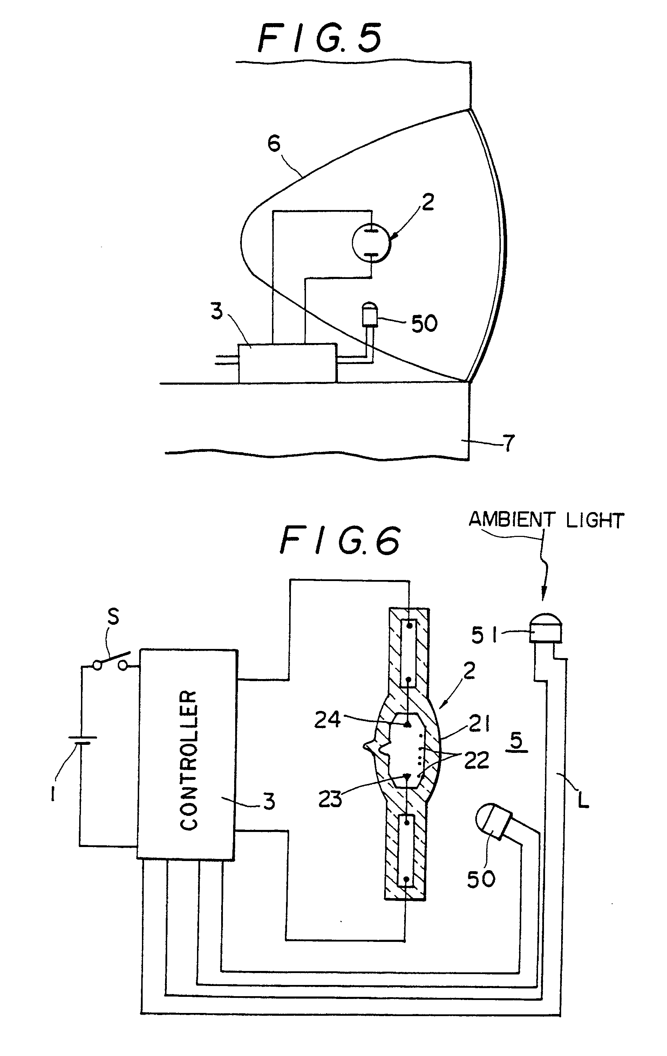

Referring to Fig. 5 showing the high-intensity electric discharge lamp unit in the first embodiment as mounted on a vehicle, the photoelectric conversion element 50 is disposed inside a reflector 6 provided on the body 7 of the vehicle at a position suitable for receiving the light emitted by the high-intensity electric discharge lamp 2. Preferably, the components of the high-intensity electric discharge lamp unit including the photoelectric converter 5 and the controller 3 other than the photoelectric conversion element 50 are disposed outside the reflector 6. The photoelectric conversion element 50 may be disposed outside the reflector 6 and optically connected to the high-intensity electric discharge lamp 2 by an optical fiber cable to receive the light emitted by the high-intensity electric discharge lamp 2.

The high-intensity electric discharge lamp 2 is located at the focus of the reflector 6 to project a light beam, i.e., substantially parallel light rays. The reflector 6 focuses the ambient light on its focus, where the high-intensity electric discharge lamp 2 is located, so that the photoelectric conversion element 50 is not affected by the ambient light when disposed at a position other than the focus as shown in Fig. 5.

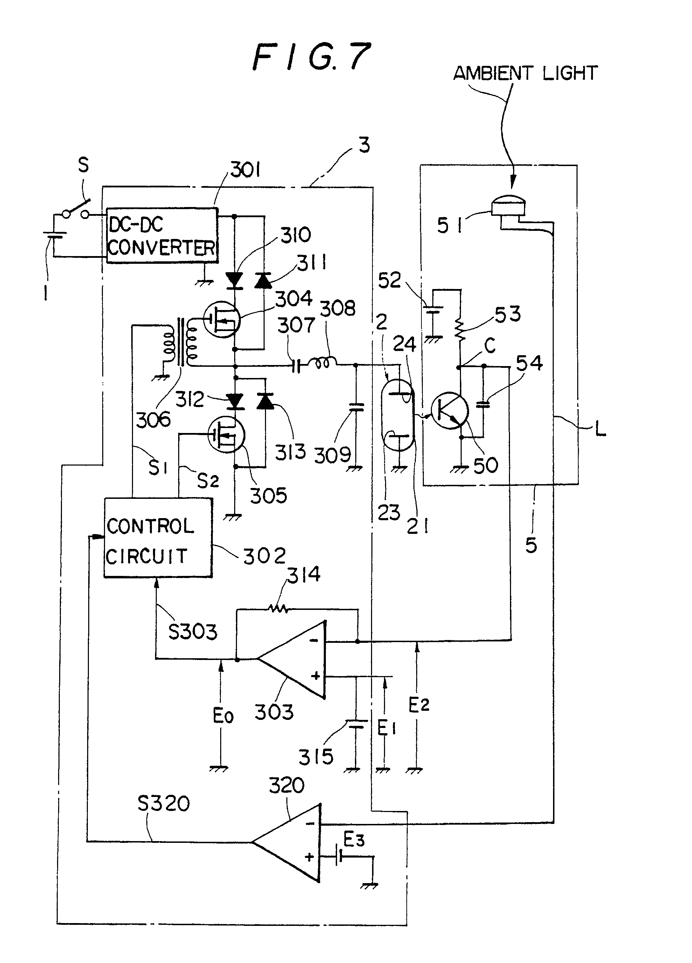

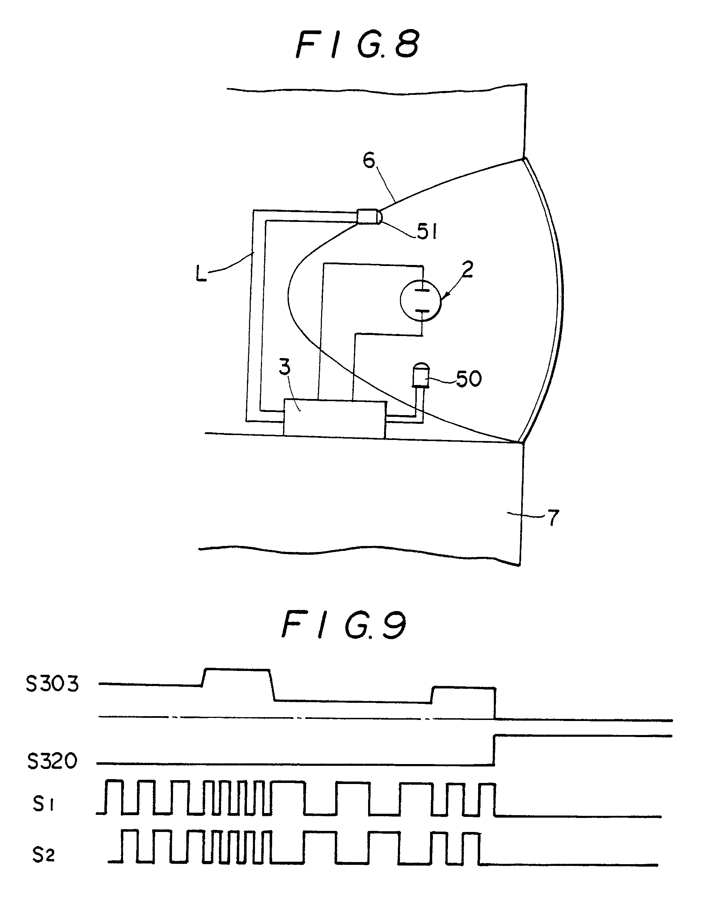

A high-intensity electric discharge lamp unit in a second embodiment according to the present invention will be described hereinafter with reference to Figs. 6, 7 and 8.

The high-intensity electric discharge lamp unit in the second embodiment is substantially the same in configuration as that in the first embodiment, except that a photoelectric converter 5 employed in the second embodiment is provided with a first photoelectric conversion element 50 for receiving the light emitted by a high-intensity electric discharge lamp 2, and a second photoelectric conversion element 51 for receiving the ambient light, and hence parts of the second embodiment like or corresponding to those of the first embodiment are denoted by the same reference characters and the description thereof will be omitted to avoid duplication.

The second photoelectric conversion element 51 is connected to a comparator 320 included in the controller 3 by a signal line L, and the output S320 of the comparator 320 is applied to the output control terminal of the control circuit 302. A reference voltage $E_3$ is applied to the negative terminal of the comparator 320. The photoelectric converter 5 may be either a composite photoelectric converter comprising, in combination, an optical system for receiving both the light emitted by the high-intensity electric discharge lamp 2 and the ambient light, and photoelectric conversion elements, such as phototransistors, for converting the light received by the optical system into a corresponding electric signal or an integral photoelectric converter comprising an optical system and photoelectric conversion elements. The composite photoelectric converter employs an optical system including a fiber cable and lenses to connect the high-intensity electric discharge lamp 2 and an ambient receiving aperture optically to the photoelectric conversion elements. The integral photoelectric converter is constructed so that the photoelectric conversion elements receive the light emitted by the high-intensity electric discharge lamp 2 and the ambient light directly, respectively. The photoelectric converter 5 may be provided with a single photoelectric conversion element capable of receiving both the light emitted by the high-intensity electric lamp 2 and the ambient light.

Functions and advantageous effects of the second embodiment will be described hereinafter.

The controller 3 controls the high-intensity electric discharge lamp 2 on the basis of the output signal of the photoelectric converter 5 given thereto. One control function of the controller 3 for controlling the high-intensity electric discharge lamp 2 controls the current supplied to the high-intensity electric discharge lamp 2 or the voltage applied to the same on the basis of the output signal of the first photoelectric conversion element 50 so that the luminous flux of the light emitted by the high-intensity electric discharge lamp 2 coincides with a predetermined desired luminous flux. The desired luminous flux, in general, is a luminous flux of the light emitted by the high-intensity electric discharge lamp 2 in the steady lighting state.

Since the high-intensity electric discharge lamp 2 is controlled on the basis of the luminous flux of the light emitted by the high-intensity electric discharge lamp 2 regardless of the internal condition of the same, the high-intensity electric discharge lamp 2 can be controlled properly so as to meet the ideal starting characteristics represented by the curve $1_1$ in the hot-start state as well as in the cold-start state substantially regardless of the internal condition thereof.

The other control function of the controller 3 turns off the high-intensity electric discharge lamp 2 when the second photoelectric conversion element 51 receives the ambient light of a luminous flux exceeding a predetermined level. The foregoing lighting action is executed while no ambient light is falling on the second photoelectric conversion element 51.

Accordingly, the high-intensity electric discharge lamp 2 can be lighted in the ideal starting characteristics substantially regardless of the internal condition thereof during the night or in a tunnel, in which no ambient light falls on the second photoelectric conversion element 51, and the high-intensity electric discharge lamp can be turned off automatically upon the reception of the ambient light by the second photoelectric conversion element 51.

The lamp turning-on action and the lamp turning-off action will be described with reference to a timing chart shown in Fig. 9, in which indicated at S303 is the output signal of the operational amplifier 303, at S320 is the output signal of the comparator 320, and at $S_1$ and $S_2$ are the output signals of the control circuit 302.

As shown in Fig. 9, the output of the comparator 320 remains LOW while no ambient light is falling on the photoelectric conversion element 51, and hence the output of the control circuit 302 is con-trolled by the output signal S303 of the operational amplifier 303. That is, as stated previously with reference to the first embodiment, the output signal S303 of the operational amplifier 303 goes HIGH when the luminous flux of the high-intensity electric discharge lamp 2 increases and thereby the respective frequencies of the output signals $S_1$ and $S_2$ of the control circuit 302 are increased. When the luminous flux of the high-intensity electric discharge lamp 2 decreases, the output signal S303 of the operational amplifier 303 goes LOW and thereby the respective frequencies of the output signals $S_1$ and $S_2$ are decreased. Thus, the luminous flux of the light emitted by the high-intensity electric discharge lamp 2 is stabilized. Upon the reception of the ambient light by the second photoelectric conversion element 51, the output signal S320 of the comparator 320 goes HIGH and thereby the generation of output signals of the control circuit 302 is interrupted to maintain the output signals $S_1$ and $S_2$ LOW and, consequently, the high-intensity electric discharge lamp 2 is turned off.

## Claims

1. A high-intensity electric discharge lamp unit comprising:
   a high-intensity electric discharge lamp which emits light by arc discharge through a gas contained in a tube;
   a photoelectric converter which receives the light emitted by the high-intensity electric discharge lamp and provides an output signal corresponding to the luminous flux of the light; and
   a controller which controls the lighting condition of the high-intensity electric discharge lamp on the basis of the output signal of the photoelectric converter.

2. A high-intensity electric discharge lamp unit according to Claim 1, wherein said photoelectric converter is provided with a photoelectric conversion element disposed near said high-intensity electric discharge lamp.

3. A high-intensity electric discharge lamp unit according to Claim 1, wherein said photoelectric converter is provided with a first photoelectric conversion element for receiving the light emitted by the high-intensity electric discharge lamp, and a second photoelectric conversion element for receiving the ambient light.

4. A high-intensity electric discharge lamp unit according to Claim 2, wherein said controller controls the lighting condition of the high-intensity electric discharge lamp when the photoelectric conversion element receives the light emitted by the high-intensity electric discharge lamp.

5. A high-intensity electric discharge lamp unit according to Claim 3, wherein said controller turns of the high-intensity electric discharge lamp when the second photoelectric conversion element receives the ambient light.

# F I G. 1
## PRIOR ART

# F I G. 2

# F I G. 3

# F I G.4

# F I G. 5

# F I G. 6

AMBIENT LIGHT

# FIG.7

AMBIENT LIGHT

# F I G. 8

# F I G. 9